# EUROPEAN PATENT APPLICATION

(11) **EP 4 366 266 A1**
(43) Date of publication of application: **08.05.2024**
(21) Application number: 22847949.9
(22) Date of filing: 10.05.2022
(51) Int. Cl.: H04L 45/74, H04L 47/00

(54) **MESSAGE TRANSMISSION METHOD AND RELATED APPARATUS**

(30) Priority: 29.07.2021 CN 202110866839
(71) Applicant: Huawei Technologies Co., Ltd., Longgang Shenzhen, Guangdong 518129 (CN)
(72) Inventor: JI, Zhigang, Shenzhen, Guangdong 518129 (CN)
(74) Representative: Pfenning, Meinig & Partner mbB
(86) International application number: PCT/CN2022/091979
(87) International publication number: WO 2023/005335

(57) **Abstract**

This application discloses a packet transmission method and a related apparatus, to implement network load balancing and improve utilization of a network bandwidth resource. The method in this application includes: A first network device obtains a remote direct memory access RDMA packet, where the RDMA packet includes a transmission identifier, and RDMA packets having a same transmission identifier need to be transmitted in sequence. The first network device determines a target forwarding path based on the transmission identifier and a destination address of the RDMA packet. The first network device forwards the RDMA packet through the target forwarding path.

## Description

This application claims priority to Chinese Patent Application No. 202110866839.3, filed with the China National Intellectual Property Administration on July 29, 2021 and entitled "PACKET TRANSMISSION METHOD AND RELATED APPARATUS", which is incorporated herein by reference in its entirety.

### TECHNICAL FIELD

This application relates to the field of communication technologies, and in particular, to a packet transmission method and a related apparatus.

### BACKGROUND

Currently, applications in fields such as high-performance computing and big data analysis are continuously and rapidly developing. These applications usually have high-concurrency and low-latency storage input/output (input/output, I/O) requirements. The existing transmission control protocol/internet protocol (Transmission Control Protocol/Internet Protocol, TCP/IP) cannot satisfy requirements of these applications. This is mainly reflected in that TCP/IP needs to implement data transmission based on a CPU, and a processing delay is excessively long, which causes a long delay between data transmission.

The remote direct memory access (Remote Direct Memory Access, RDMA) technology satisfies the high-concurrency and low-latency storage I/O requirements of the applications. RDMA can quickly move data from a system to a memory of a remote system over a network without affecting an operating system. RDMA eliminates external memory replication and text exchange operations, thereby releasing a memory bandwidth and a CPU cycle and improving data transmission efficiency. Currently, the RDMA transmission protocol is widely used in applications in fields such as high-performance computing and artificial intelligence to implement data transmission.

However, currently, RDMA data transmission is carried on a connection established by an application. Once the application establishes a connection between two devices, RDMA data between the two devices is transmitted in a network through a same forwarding path, which easily causes an unbalanced network load and limits proper utilization of a network bandwidth resource.

### SUMMARY

This application provides a packet transmission method. Packets needing to be transmitted in sequence are marked by including a transmission identifier in the packets, and a network device selects a forwarding path for the packets based on the transmission identifier in the packets. In this way, it is ensured that the packets needing to be transmitted in sequence can be forwarded through a same forwarding path, and packets having different transmission identifiers can be forwarded through different forwarding paths, thereby implementing network load balancing and improving utilization of a network bandwidth resource.

A first aspect of this application provides a packet transmission method. A first network device obtains an RDMA packet, where the RDMA packet includes a transmission identifier, and RDMA packets having a same transmission identifier need to be transmitted in sequence. The RDMA packet obtained by the first network device is a packet used for transmitting RDMA data, and the RDMA packet includes the transmission identifier and the RDMA data. The RDMA data is data needing to be sent by a source server to a destination server.

Then, the first network device determines a target forwarding path based on the transmission identifier and a destination address of the RDMA packet. The destination address of the RDMA packet is used for determining a forwarding path that is capable of being used for forwarding the RDMA packet, and the transmission identifier in the RDMA packet is used for selecting the target forwarding path from a plurality of forwarding paths that are capable of being used for forwarding the RDMA packet.

Finally, the first network device forwards the RDMA packet through the target forwarding path.

In this application, packets needing to be transmitted in sequence are marked by including a transmission identifier in the RDMA packets, and a network device selects a forwarding path for the RDMA packets based on the transmission identifier in the RDMA packets. In this way, it is ensured that the RDMA packets needing to be transmitted in sequence can be forwarded through a same forwarding path, and RDMA packets having different transmission identifiers can be forwarded through different forwarding paths, thereby implementing network load balancing and improving utilization of a network bandwidth resource.

Optionally, the first network device determines, based on the destination address of the RDMA packet, a plurality of forwarding paths that are capable of being used for forwarding the RDMA packet. The first network device determines the target forwarding path from the plurality of forwarding paths based on the transmission identifier.

Each of the plurality of forwarding paths is identified by using one egress port of the first network device. The first network device may search for a routing table based on the destination address of the RDMA packet, to determine a plurality of egress ports that are capable of being used for forwarding the RDMA packet, where the plurality of egress ports respectively correspond to the plurality of forwarding paths. The first network device may select a target egress port from the plurality of egress ports based on the transmission identifier, and forward the RDMA packet through the target egress port.

Optionally, the first network device determines the target forwarding path from the plurality of forwarding paths based on the transmission identifier and one or more of a source address, the destination address, a source port number, a destination port number, and a protocol number of the RDMA packet.

In other words, the first network device may use the transmission identifier and one or more of the source address, the destination address, the source port number, the destination port number, and the protocol number of the RDMA packet together as hash factors, and calculate hash values of the plurality of hash factors, to determine the target forwarding path from the plurality of forwarding paths based on the calculated hash values.

Optionally, the first network device sequentially obtains a plurality of RDMA packets, where all the plurality of RDMA packets include the transmission identifier, and destination addresses of the plurality of RDMA packets are the same. The first network device sequentially forwards the plurality of RDMA packets through the target forwarding path.

Optionally, the transmission identifier is located in an RDMA header of the RDMA packet. The RDMA header may refer to a standard packet header of the RDMA packet, for example, a base transport header (Base Transport Header, BTH) of the RDMA packet.

Optionally, the transmission identifier is located in one or more reserved fields in the RDMA header. In a standard protocol, the RDMA header includes one or more reserved fields, and the transmission identifier may be represented by using a value in the one or more reserved fields.

The one or more reserved fields in the RDMA header are used for representing the transmission identifier, so that a modification to the conventional technologies can be reduced, and implementability of a solution can be improved.

Optionally, the transmission identifier is located in an extended field in the RDMA header.

Optionally, the RDMA packet includes an RDMA over converged Ethernet RoCE packet, an iWARP packet, or an InfiniBand InfiniBand packet.

Optionally, when obtaining the remote direct memory access RDMA packet, the first network device obtains a message sent by an application layer. The first network device generates at least one RDMA packet based on the message, where the at least one RDMA packet includes a same transmission identifier.

Optionally, the first network device receives the RDMA packet sent by a second network device, where the second network device is an upstream device of the first network device.

A second aspect of this application provides a network device, including an obtaining unit, a processing unit, and a sending unit. The obtaining unit is configured to obtain an RDMA packet, where the RDMA packet includes a transmission identifier, and RDMA packets having a same transmission identifier need to be transmitted in sequence. The processing unit is configured to determine a target forwarding path based on the transmission identifier and a destination address of the RDMA packet. The sending unit is configured to forward the RDMA packet through the target forwarding path.

Optionally, the processing unit is further configured to: determine, based on the destination address of the RDMA packet, a plurality of forwarding paths that are capable of being used for forwarding the RDMA packet; and determine the target forwarding path from the plurality of forwarding paths based on the transmission identifier.

Optionally, the processing unit is specifically configured to determine the target forwarding path from the plurality of forwarding paths based on the transmission identifier and one or more of a source address, the destination address, a source port number, a destination port number, and a protocol number of the RDMA packet.

Optionally, the obtaining unit is further configured to sequentially obtain a plurality of RDMA packets, where all the plurality of RDMA packets include the transmission identifier, and destination addresses of the plurality of RDMA packets are the same. The processing unit is further configured to sequentially forward the plurality of RDMA packets through the target forwarding path.

Optionally, the transmission identifier is located in an RDMA header of the RDMA packet.

Optionally, the transmission identifier is located in one or more reserved fields in the RDMA header.

Optionally, the transmission identifier is located in an extended field in the RDMA header.

Optionally, the RDMA packet includes an RDMA over converged Ethernet RoCE packet, an iWARP packet, or an InfiniBand InfiniBand packet.

Optionally, the obtaining unit is configured to obtain a message sent by an application layer. The processing unit is configured to generate at least one RDMA packet based on the message, where the at least one RDMA packet includes a same transmission identifier.

Optionally, the obtaining unit is configured to receive the RDMA packet sent by a second network device, where the second network device is an upstream device of a first network device.

A third aspect of this application provides a network device. The network device includes a processor, configured to enable the network device to implement the method described in any one of the first aspect or the possible implementations of the first aspect. The device may further include a memory. The memory is coupled to the processor. When the processor executes instructions stored in the memory, the network device is enabled to implement the method described in any one of the possible implementations of the first aspect. The device may further include a communication interface. The communication interface is used by the apparatus to communicate with another device. For example, the communication interface may be a transceiver, a circuit, a bus, a module, or a communication interface of another type.

The instructions in the memory in this application may be pre-stored, or may be downloaded from the internet and then stored when the network device is used. A source of the instructions in the memory is not specifically limited in this application. The coupling in this application is indirect coupling or a connection between apparatuses, units, or modules, may be in an electrical form, a mechanical form, or another form, and is used for information exchange between the apparatuses, the units, or the modules.

A fourth aspect of this application provides a computer storage medium. The computer storage medium may be non-volatile. The computer storage medium stores computer-readable instructions, and when the computer-readable instructions are executed by a processor, the method described in any one of the first aspect or the possible implementations of the first aspect is implemented.

A fifth aspect of this application provides a computer program product including instructions. When the computer program product runs on a computer, the computer is enabled to perform the method described in any one of the first aspect or the possible implementations of the first aspect.

A sixth aspect of this application provides a network system. The network system includes a plurality of network devices according to the second aspect or the third aspect.

The solutions provided in the second aspect to the sixth aspect are used for implementing or cooperating to implement the method provided in the first aspect, and therefore can achieve beneficial effects the same as or corresponding to those in the first aspect. Details are not described herein again.

### BRIEF DESCRIPTION OF DRAWINGS

FIG. 1 is a schematic diagram of an application architecture of a packet transmission method according to an embodiment of this application;
FIG. 2 is a schematic flowchart of a packet transmission method 200 according to an embodiment of this application;
FIG. 3 is a schematic diagram of a format of an RDMA packet according to an embodiment of this application;
FIG. 4 is a schematic diagram of a format of an RDMA header according to an embodiment of this application;
FIG. 5 is a schematic diagram of generating a packet by a source network device based on a message according to an embodiment of this application;
FIG. 6 is a schematic diagram of a packet transmission process according to an embodiment of this application;
FIG. 7 is a schematic diagram of another packet transmission process according to an embodiment of this application;
FIG. 8 is a schematic diagram of a structure of a network device 800 according to an embodiment of this application;
FIG. 9 is a schematic diagram of a structure of a network device 900 according to an embodiment of this application; and
FIG. 10 is a schematic diagram of a structure of a network device 1000 according to an embodiment of this application.

### DESCRIPTION OF EMBODIMENTS

To make objectives, technical solutions, and advantages of this application clearer and more comprehensible, the following describes embodiments of this application with reference to accompanying drawings. It is clear that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the descriptions termed in such a manner are interchangeable in proper cases so that embodiments can be implemented in a sequence other than the sequence illustrated or described in this application. Moreover, terms "include", "have", and any other variants mean to cover the non-exclusive inclusion, for example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into units in this application is logical division. During actual application, there may be another division manner. For example, a plurality of units may be combined or integrated into another system, or some features may be ignored or not performed. In addition, the displayed or discussed mutual coupling or direct coupling or communication connection may be implemented through some interfaces. The indirect coupling or communication connection between the units may be implemented in an electrical form or another similar form. This is not limited in this application. In addition, units or subunits described as separate components may or may not be physically separate, may or may not be physical units, or may be distributed into a plurality of circuit units. Some or all of the units may be selected based on actual requirements to achieve the objectives of the solutions of this application.

RDMA can quickly move data from a system to a memory of a remote system over a network without affecting an operating system. RDMA eliminates external memory replication and text exchange operations, thereby releasing a memory bandwidth and a CPU cycle and improving data transmission efficiency. Currently, the RDMA transmission protocol is widely used in applications in fields such as high-performance computing and artificial intelligence to implement data transmission.

However, currently, RDMA data transmission is carried on a connection established by an application. Once the application establishes a connection between two devices, RDMA data between the two devices is transmitted in a network through a same forwarding path, which easily causes an unbalanced network load and limits proper utilization of a network bandwidth resource.

In view of this, an embodiment of this application provides a packet transmission method. Packets needing to be transmitted in sequence are marked by including a transmission identifier in the packets, and a network device selects a forwarding path for the packets based on the transmission identifier in the packets. In this way, it is ensured that the packets needing to be transmitted in sequence can be forwarded through a same forwarding path, and packets having different transmission identifiers can be forwarded through different forwarding paths, thereby implementing network load balancing and improving utilization of a network bandwidth resource.

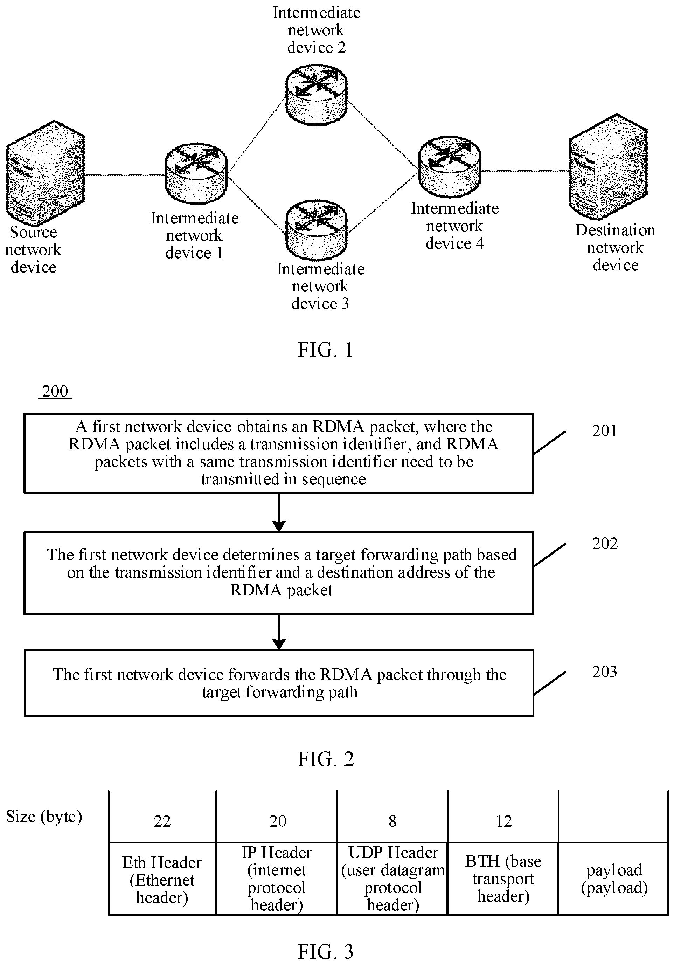

FIG. 1 is a schematic diagram of an application architecture of a packet transmission method according to an embodiment of this application. As shown in FIG. 1, the application architecture includes a source network device, an intermediate network device 1 to an intermediate network device 4, and a destination network device. The source network device and the destination network device may be servers, and the intermediate network device 1 to the intermediate network device 4 may be physical devices such as routers, switches, or gateways.

The source network device needs to send an RDMA packet to the destination network device, and the RDMA packet passes through an intermediate network device between the source network device and the destination network device. In a process in which the RDMA packet is transmitted from the source network device to the destination network device, a network device responsible for forwarding the RDMA packet selects a forwarding path for the RDMA packet based on a transmission identifier in the RDMA packet, so that RDMA packets having a same transmission identifier are forwarded through a same forwarding path.

FIG. 2 is a schematic flowchart of a packet transmission method 200 according to an embodiment of this application. As shown in FIG. 2, the packet transmission method 200 includes the following steps 201 to 203.

Step 201: A first network device obtains an RDMA packet, where the RDMA packet includes a transmission identifier, and RDMA packets having a same transmission identifier need to be transmitted in sequence.

In this embodiment, the RDMA packet obtained by the first network device is a packet used for transmitting RDMA data, and the RDMA packet includes the transmission identifier and the RDMA data. The RDMA data is data needing to be sent by a source server to a destination server. When the destination server accesses data in the source server by using the RDMA technology, the source server sends, to the destination server, the RDMA data that the destination server requests to access. The transmission identifier may also be referred to as a transaction (transaction) identifier.

In a possible implementation, the first network device may be, for example, a server.

For example, when the first network device is a source server, an application layer in the first network device sends a message (message) to a transport layer in the first network device, where the message includes the RDMA data needing to be sent to the destination server. After obtaining the message sent by the application layer, the first network device generates at least one RDMA packet based on the message, where the at least one RDMA packet includes a same transmission identifier.

Because the RDMA data is usually limited by a maximum transmission unit (maximum transmission unit, MTU) when being transmitted in a network, RDMA data in a same message sent by the application layer may be divided by the first network device into one or more RDMA packets for transmission. The MTU is a size of a maximum data packet that can pass through a network. When a data volume of the message obtained by the first network device is greater than the MTU, the first network device generates a plurality of RDMA packets based on the message, where the plurality of RDMA packets respectively carry a part of the RDMA data in the message; or when a data volume of the message obtained by the first network device is less than or equal to the MTU, the first network device generates one RDMA packet based on the message, where the RDMA packet carries all the RDMA data in the message.

When the first network device generates a plurality of RDMA packets based on the message sent by the application layer, the first network device adds a same transmission identifier to the plurality of RDMA packets. RDMA data included in the plurality of RDMA packets generated by the first network device belongs to a same message, and the plurality of RDMA packets need to be transmitted in sequence to ensure that the destination server can receive complete RDMA data in the message. Therefore, the first network device adds a same transmission identifier to the plurality of RDMA packets, to ensure that the plurality of RDMA packets can be transmitted in sequence. For example, the first network device may allocate a transmission identifier to the message, and all the plurality of RDMA packets generated by the first network device based on the message include the transmission identifier corresponding to the message, to ensure that the plurality of RDMA packets corresponding to the message include a same transmission identifier.

When the first network device obtains a plurality of messages sent by the application layer, and the plurality of messages are indicated to be transmitted in sequence, the first network device allocates a same transmission identifier to the plurality of messages. In this way, when the first network device generates the plurality of RDMA packets based on the plurality of messages, the plurality of RDMA packets generated by the first network device and corresponding to the plurality of messages include a same transmission identifier. For example, when the application layer sends a plurality of messages to the first network device, and RDMA data in the plurality of messages is associated with each other, the application layer indicates that the plurality of messages need to be transmitted in sequence.

In another possible implementation, the first network device may be, for example, a physical device such as a router, a switch, or a gateway, or may be a virtual device that supports packet forwarding.

Specifically, a manner in which the first network device obtains the RDMA packet may be as follows: The first network device receives the RDMA packet sent by a second network device, where the second network device is an upstream device of the first network device. For example, the second network device may be a physical device such as a source server, a router, a switch, or a gateway, or may be a virtual device that supports packet forwarding. Simply speaking, both the first network device and the second network device are network devices on a forwarding path for the RDMA packet. The second network device forwards the RDMA packet to the first network device, and the first network device continues to forward the RDMA packet to a next hop device of the first network device.

Optionally, the RDMA packet in this embodiment may include an RDMA over converged Ethernet (RDMA over Converged Ethernet, RoCE) packet, an iWARP packet, or an InfiniBand (InfiniBand) packet. The RoCE packet is a packet transmitted based on the RoCE protocol, the iWARP packet is a packet transmitted based on the iWARP protocol, and the InfiniBand packet is a packet transmitted based on the InfiniBand protocol. The RoCE protocol is a network protocol that allows RDMA to be performed by using the Ethernet; the iWARP protocol is a network protocol that allows RDMA to be performed by using the transmission control protocol (Transmission Control Protocol, TCP); the iWARP protocol is actually an internet wide-area RDMA protocol; and the InfiniBand protocol is a next-generation network protocol that supports RDMA.

It should be noted that the RDMA packet in this embodiment may also be a packet transmitted based on another protocol, and a specific form of the RDMA packet is not limited in this embodiment.

Step 202: The first network device determines a target forwarding path based on the transmission identifier and a destination address of the RDMA packet.

In this embodiment, in a process in which the first network device forwards the RDMA packet, the first network device determines the target forwarding path for the RDMA packet based on the transmission identifier and the destination address of the RDMA packet. The destination address of the RDMA packet is used for determining a forwarding path that is capable of being used for forwarding the RDMA packet, and the transmission identifier in the RDMA packet is used for selecting the target forwarding path from a plurality of forwarding paths that are capable of being used for forwarding the RDMA packet.

For example, the first network device may determine, based on the destination address of the RDMA packet, a plurality of forwarding paths that are capable of being used for forwarding the RDMA packet. Each of the plurality of forwarding paths is identified by using one egress port of the first network device. The first network device may search for a routing table based on the destination address of the RDMA packet, to determine a plurality of egress ports that are capable of being used for forwarding the RDMA packet, where the plurality of egress ports respectively correspond to the plurality of forwarding paths. Then, the first network device determines the target forwarding path from the plurality of forwarding paths based on the transmission identifier. That is, the first network device selects a target egress port from the plurality of egress ports based on the transmission identifier, and forwards the RDMA packet through the target egress port.

Optionally, the first network device may use the transmission identifier as a hash factor, and calculate a hash value of the transmission identifier, to determine the target forwarding path from the plurality of forwarding paths based on the hash value of the transmission identifier.

Optionally, the first network device may use the transmission identifier and one or more of a source address, the destination address, a source port number, a destination port number, and a protocol number of the RDMA packet as hash factors, and calculate hash values of the plurality of hash factors, to determine the target forwarding path from the plurality of forwarding paths based on the calculated hash values. For example, the first network device may use the transmission identifier and the source address and the destination address of the RDMA packet as hash factors, and calculate hash values of the three hash factors, to determine the target forwarding path based on the calculated hash values. For another example, the first network device may use the transmission identifier and the source address, the destination address, the source port number, the destination port number, and the protocol number of the RDMA packet as hash factors, and calculate hash values of the six hash factors, to determine the target forwarding path based on the calculated hash values.

Step 203: The first network device forwards the RDMA packet through the target forwarding path.

After determining the target forwarding path, the first network device forwards the RDMA packet through the determined target forwarding path. For example, when the target forwarding path is identified by using the target egress port, the first network device forwards the RDMA packet through the target egress port, to forward the RDMA packet to a next hop device of the first network device.

In this embodiment, RDMA packets needing to be transmitted in sequence are marked by including a transmission identifier in the RDMA packets, and a network device selects a forwarding path for the RDMA packets based on the transmission identifier in the RDMA packets. In this way, it is ensured that the RDMA packets needing to be transmitted in sequence can be forwarded through a same forwarding path, and RDMA packets having different transmission identifiers can be forwarded through different forwarding paths, thereby implementing network load balancing and improving utilization of a network bandwidth resource. Because the RDMA packets needing to be transmitted in sequence carry a same transmission identifier, all the RDMA packets needing to be transmitted in sequence can be forwarded through a same forwarding path, to ensure that the RDMA packets are transmitted in sequence.

In a possible embodiment, the first network device may sequentially obtain a plurality of RDMA packets, where all the plurality of RDMA packets include the transmission identifier, and destination addresses of the plurality of RDMA packets are the same. Because both the destination addresses of the plurality of RDMA packets and included transmission identifiers are the same, the first network device determines a same target forwarding path from the plurality of forwarding paths. In addition, the first network device sequentially forwards the plurality of RDMA packets through the target forwarding path.

In this embodiment, the first network device selects the forwarding path for the RDMA packet based on the transmission identifier in the RDMA packet, so that the first network device can sequentially forward, through a same forwarding path, the plurality of RDMA packets needing to be transmitted in sequence, thereby ensuring that the RDMA packets are transmitted in sequence.

The foregoing describes a process in which the network device forwards the RDMA packet based on the transmission identifier in the RDMA packet. The following describes a manner in which the RDMA packet carries the transmission identifier.

In a possible embodiment, the transmission identifier in the RDMA packet is located in an RDMA header of the RDMA packet. The RDMA header may refer to a packet header of the RDMA packet, for example, a base transport header (Base Transport Header, BTH) of the RDMA packet. For example, FIG. 3 is a schematic diagram of a format of an RDMA packet according to an embodiment of this application. As shown in FIG. 3, the RDMA packet separately includes an Ethernet header (Eth Header), an internet protocol header (Internet Protocol Header, IP Header), a user datagram protocol header (User Datagram Protocol Header, UDP Header), a BTH, and a payload (payload). A transmission identifier in the RDMA packet may be located in a BTH of the RDMA packet.

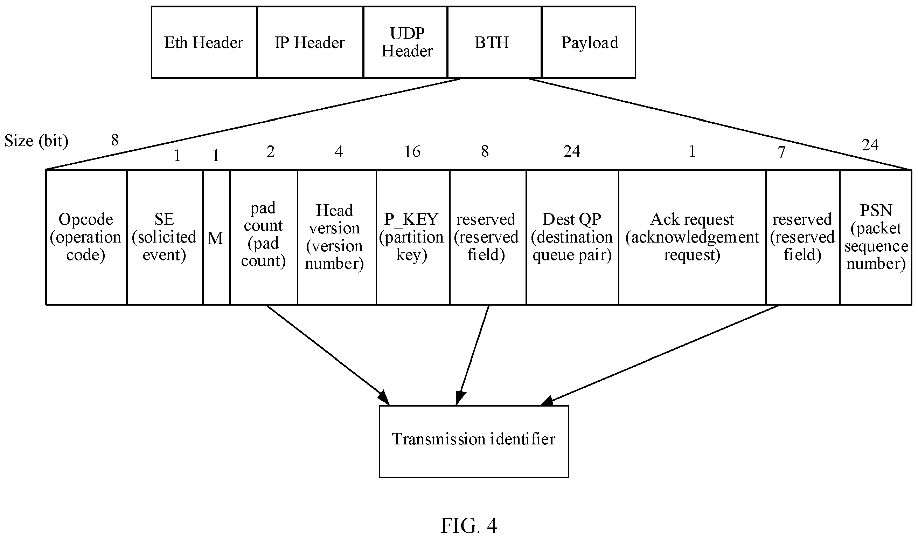

Optionally, the transmission identifier is located in one or more reserved fields in the RDMA header. In a standard protocol, the RDMA header includes one or more reserved fields, and the transmission identifier may be represented by using a value in the one or more reserved fields. For example, FIG. 4 is a schematic diagram of a format of an RDMA header according to an embodiment of this application. As shown in FIG. 4, the RDMA header includes a plurality of reserved fields. A pad count (pad count) field (2 bits), a first reserved field (8 bits), and a second reserved field (7 bits) are all reserved fields in the RDMA header, and the transmission identifier may be represented by using values in the plurality of reserved fields. For example, when the transmission identifier is represented by using the foregoing three reserved fields, a length of the transmission identifier is 17 bits. For another example, when the transmission identifier is represented by using the first reserved field and the second reserved field, a length of the transmission identifier is 15 bits.

Optionally, the transmission identifier is located in an extended field in the RDMA header. Specifically, in actual application, the RDMA header in the standard protocol may be extended, so that the RDMA header includes a newly extended field. A size of the extended field in the RDMA header may be determined according to actual application. For example, a length of the extended field in the RDMA header may be 10 bits or 15 bits. In addition, a location of the extended field in the RDMA header may also be determined according to actual application. For example, the extended field is at an end location or any middle location of the RDMA header. The size and the location of the extended field in the RDMA header are not specifically limited in this embodiment of this application.

To facilitate understanding of the packet transmission method provided in embodiments of this application, the following describes in detail the packet transmission method provided in embodiments of this application with reference to specific examples.

The system architecture shown in FIG. 1 is used as an example. After obtaining a message sent by an application layer, the source network device generates an RDMA packet, where the RDMA packet includes RDMA data to be transmitted to the destination network device and a transmission identifier. After generating the RDMA packet, the source network device transmits the RDMA packet by using an intermediate network device between the source network device and the destination network device, so that the RDMA packet can be forwarded by the intermediate network device to the destination network device.

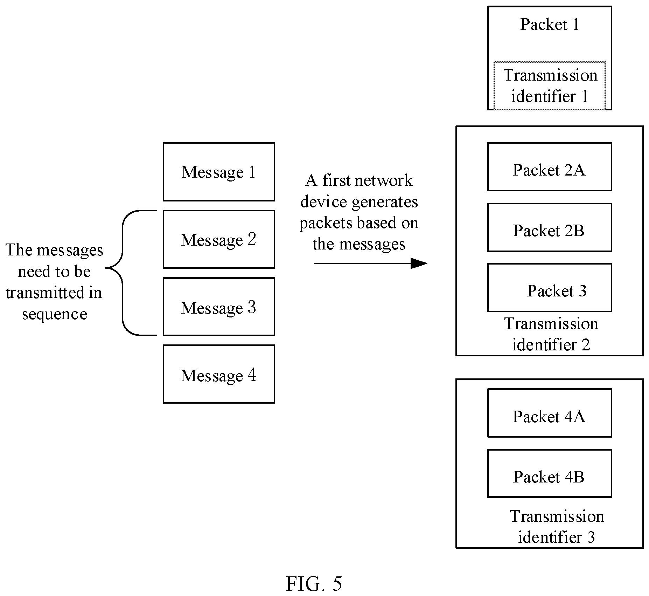

FIG. 5 is a schematic diagram of generating a packet by a source network device based on a message according to an embodiment of this application. As shown in FIG. 5, the source network device receives a message 1, a message 2, a message 3, and a message 4 sent by an application layer, where the message 2 and the message 3 are messages to be transmitted in sequence. Then, the source network device generates corresponding packets based on an MTU and the message 1, the message 2, the message 3, and the message 4.

Specifically, because a data volume of the message 1 is less than the MTU, the source network device may generate a packet 1 based on the message 1, where the packet 1 includes RDMA data in the message 1 and a transmission identifier 1.

Because a data volume of the message 2 is greater than the MTU, the source network device generates a packet 2A and a packet 2B based on the message 2, where the packet 2A and the packet 2B respectively carry a part of RDMA data in the message 2. By using the packet 2A and the packet 2B, the source network device may transmit all the RDMA data in the message 2. In addition, because a data volume of the message 3 is less than the MTU, the source network device may generate a packet 3 based on the message 3. Based on that the message 2 and the message 3 are transmitted in sequence, the source network device may allocate a same transmission identifier, that is, a transmission identifier 2, to the message 2 and the message 3. In this way, the packet 2A, the packet 2B, and the packet 3 generated by the source network device all include the transmission identifier 2.

Because a data volume of the message 4 is greater than the MTU, the source network device generates a packet 4A and a packet 4B based on the message 4, where the packet 4A and the packet 4B respectively carry a part of RDMA data in the message 4. In addition, the packet 4A and the packet 4B include a same transmission identifier, that is, a transmission identifier 3.

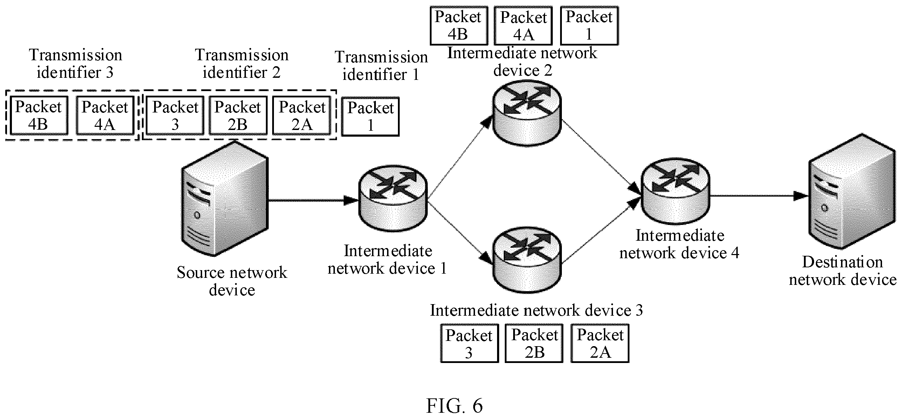

FIG. 6 is a schematic diagram of a packet transmission according to an embodiment of this application. As shown in FIG. 6, the source network device generates the packet 1, the packet 2A, the packet 2B, the packet 3, the packet 4A, and the packet 4B, and sequentially sends the plurality of foregoing packets to the intermediate network device 1.

When sending the foregoing packets, the intermediate network device 1 determines a forwarding path 1 and a forwarding path 2 based on destination addresses of the packets. The forwarding path 1 is a path to the destination network device through the intermediate network device 2, and the forwarding path 1 may be identified by using an egress port in the intermediate network device 1 that is connected to the intermediate network device 2. The forwarding path 2 is a path to the destination network device through the intermediate network device 3, and the forwarding path 2 may be identified by using an egress port in the intermediate network device 1 that is connected to the intermediate network device 3.

Specifically, when forwarding the packet 1, the intermediate network device 1 selects the forwarding path 1 based on the transmission identifier 1 in the packet 1, to send the packet 1 to the intermediate network device 2.

When forwarding the packet 2A, the packet 2B, and the packet 3, the intermediate network device 1 selects the forwarding path 2 based on the transmission identifier 2 in the packet 2A, the packet 2B, and the packet 3, to sequentially send the packet 2A, the packet 2B, and the packet 3 to the intermediate network device 3.

When forwarding the packet 4A and the packet 4B, the intermediate network device 1 selects the forwarding path 1 based on the transmission identifier 3 in the packet 4A and the packet 4B, to sequentially send the packet 4A and the packet 4B to the intermediate network device 2.

Finally, the intermediate network device 2 sequentially sends the packet 1, the packet 4A, and the packet 4B to the intermediate network device 4, and the intermediate network device 3 sequentially sends the packet 2A, the packet 2B, and the packet 3 to the intermediate network device 4. After sequentially receiving the packet 1, the packet 4A, and the packet 4B, the intermediate network device 4 sequentially sends the packet 1, the packet 4A, and the packet 4B to the destination network device. In addition, after sequentially receiving the packet 2A, the packet 2B, and the packet 3, the intermediate network device 4 sequentially sends the packet 2A, the packet 2B, and the packet 3 to the destination network device.

It can be learned from FIG. 6 that, for six packets (that is, the packet 1, the packet 2A, the packet 2B, the packet 3, the packet 4A, and the packet 4B) generated by the source network device, the packet 1, the packet 4A, and the packet 4B are forwarded through the forwarding path 1, and the packet 2A, the packet 2B, and the packet 3 are forwarded through the forwarding path 2, to implement network load balancing and improve utilization of a network bandwidth resource.

FIG. 6 describes a process in which the intermediate network device selects a target forwarding path from a plurality of forwarding paths based on the transmission identifier in the packet. In actual application, the source network device may be usually dual-homed to a plurality of intermediate network devices. Therefore, the source network device may also select the target forwarding path from the plurality of forwarding paths based on the transmission identifier in the packet. For example, in a data center scenario, a source server is dual-homed to two switches, and forwards data by using the two switches.

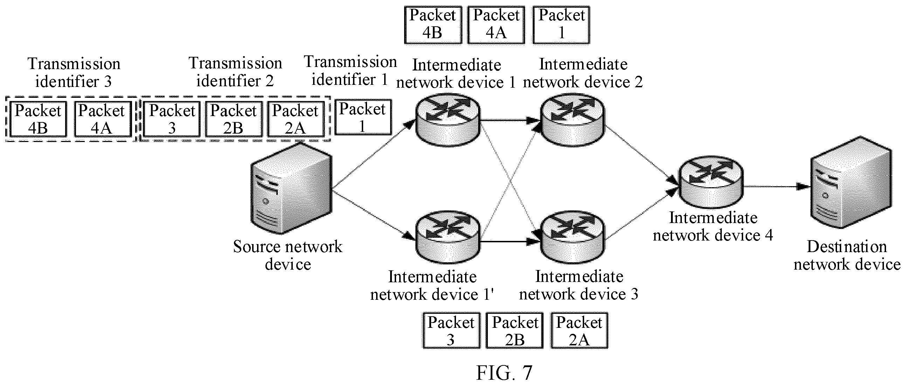

FIG. 7 is a schematic diagram of another packet transmission according to an embodiment of this application. Compared with FIG. 6, the source network device further accesses an intermediate network device 1', that is, the source network device is dual-homed to the intermediate network device 1 and the intermediate network device 1'. In addition, the intermediate network device 1 is separately connected to the intermediate network device 2 and the intermediate network device 3, and the intermediate network device 1' is also separately connected to the intermediate network device 2 and the intermediate network device 3.

After generating the packet 1, the packet 2A, the packet 2B, the packet 3, the packet 4A, and the packet 4B, the source network device forwards the packets based on the transmission identifiers in the foregoing packets.

Specifically, when forwarding the packet 1, the source network device selects, based on the transmission identifier 1 in the packet 1, a forwarding path through the intermediate network device 1, to send the packet 1 to the intermediate network device 1. The intermediate network device 1 selects, based on the transmission identifier 1 in the packet 1, a forwarding path through the intermediate network device 2, to send the packet 1 to the intermediate network device 2.

When forwarding the packet 2A, the packet 2B, and the packet 3, the source network device selects, based on the transmission identifier 2 in the packet 2A, the packet 2B, and the packet 3, a forwarding path through the intermediate network device 1', to sequentially send the packet 2A, the packet 2B, and the packet 3 to the intermediate network device 1'. The intermediate network device 1' selects, based on the transmission identifier 2, a forwarding path through the intermediate network device 3, to send the packet 2A, the packet 2B, and the packet 3 to the intermediate network device 3.

When forwarding the packet 4A and the packet 4B, the source network device selects, based on the transmission identifier 3 in the packet 4A and the packet 4B, a forwarding path through the intermediate network device 1, to sequentially send the packet 4A and the packet 4B to the intermediate network device 1. The intermediate network device 1 selects, based on the transmission identifier 3, a forwarding path through the intermediate network device 2, to send the packet 4A and the packet 4B to the intermediate network device 2.

It can be learned from FIG. 7 that, when the source network device is dual-homed to the intermediate network devices, the source network device may also select, based on the transmission identifier in the packet, a corresponding forwarding path from a plurality of forwarding paths to forward the packet, thereby implementing network load balancing and improving utilization of a network bandwidth resource.

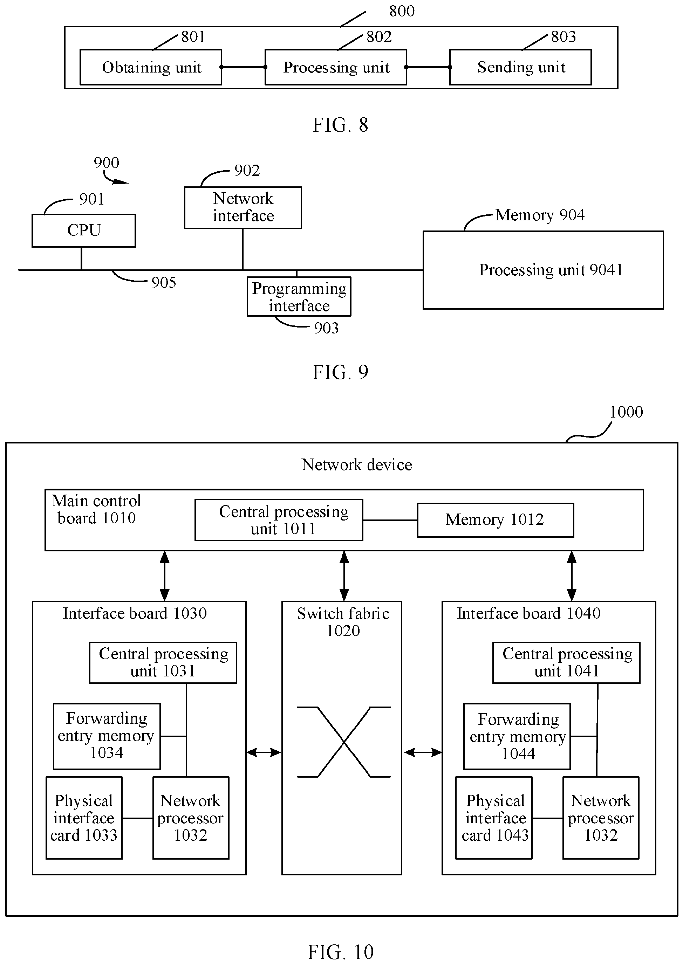

To implement the foregoing embodiments, this application further provides a network device. FIG. 8 is a schematic diagram of a structure of a network device 800 according to an embodiment of this application.

As shown in FIG. 8, the network device 800 includes an obtaining unit 801, a processing unit 802, and a sending unit 803. The obtaining unit 801 is configured to obtain an RDMA packet, where the RDMA packet includes a transmission identifier, and RDMA packets having a same transmission identifier need to be transmitted in sequence. The processing unit 802 is configured to determine a target forwarding path based on the transmission identifier and a destination address of the RDMA packet. The sending unit 803 is configured to forward the RDMA packet through the target forwarding path.

Optionally, the processing unit 802 is further configured to: determine, based on the destination address of the RDMA packet, a plurality of forwarding paths that are capable of being used for forwarding the RDMA packet; and determine the target forwarding path from the plurality of forwarding paths based on the transmission identifier.

Optionally, the processing unit 802 is specifically configured to determine the target forwarding path from the plurality of forwarding paths based on the transmission identifier and one or more of a source address, the destination address, a source port number, a destination port number, and a protocol number of the RDMA packet.

Optionally, the obtaining unit 801 is further configured to sequentially obtain a plurality of RDMA packets, where all the plurality of RDMA packets include the transmission identifier, and destination addresses of the plurality of RDMA packets are the same. The processing unit 802 is further configured to sequentially forward the plurality of RDMA packets through the target forwarding path.

Optionally, the transmission identifier is located in an RDMA header of the RDMA packet.

Optionally, the transmission identifier is located in one or more reserved fields in the RDMA header.

Optionally, the transmission identifier is located in an extended field in the RDMA header.

Optionally, the RDMA packet includes an RDMA over converged Ethernet RoCE packet, an iWARP packet, or an InfiniBand InfiniBand packet.

Optionally, the obtaining unit 801 is configured to obtain a message sent by an application layer. The processing unit 802 is configured to generate at least one RDMA packet based on the message, where the at least one RDMA packet includes a same transmission identifier.

Optionally, the obtaining unit 801 is configured to receive the RDMA packet sent by a second network device, where the second network device is an upstream device of a first network device.

FIG. 9 is a schematic diagram of a structure of a network device 900 according to an embodiment of this application. Although the network device 900 shown in FIG. 9 shows some specific features, a person skilled in the art may be aware from embodiments of this application that, for brevity, FIG. 9 does not show various other features, to avoid confusing more related aspects of the implementations disclosed in embodiments of this application. For this purpose, as an example, in some implementations, the network device 900 includes one or more processing units (for example, a CPU) 901, a network interface 902, a programming interface 903, a memory 904, and one or more communication buses 905 that are configured to interconnect various components. In some other implementations, some functional components or units may be omitted from or added to the network device 900 based on the foregoing example.

In some implementations, the network interface 902 is configured to connect to one or more other network devices/servers in a network system. In some implementations, the communication bus 905 includes a circuit that interconnects system components and controls communication between the system components. The memory 904 may include a non-volatile memory, for example, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The memory 904 may also include a volatile memory. The volatile memory may be a random access memory (random access memory, RAM), and is used as an external cache.

In some implementations, the memory 904 or a non-transitory computer-readable storage medium of the memory 904 stores the following program, module, and data structure, or a subset thereof, and for example, includes an obtaining unit (not shown), a sending unit (not shown), and a processing unit 9041.

In a possible embodiment, the network device 900 may have any function of the first network device in the method embodiment corresponding to FIG. 2.

It should be understood that the network device 900 corresponds to the first network device in the foregoing method embodiment, and the modules and the foregoing other operations and/or functions in the network device 900 are separately used for implementing various steps and methods implemented by the first network device in the foregoing method embodiment. For specific details, refer to the method embodiment corresponding to FIG. 2. For brevity, details are not described herein again.

It should be understood that in this application, the network interface 902 on the network device 900 may complete data receiving and transmitting operations, or a processor may invoke program code in the memory, and implement a function of a transceiver unit in cooperation with the network interface 902 when required.

In various implementations, the network device 900 is configured to perform the packet transmission method provided in embodiments of this application, for example, perform the packet transmission method corresponding to the embodiment shown in FIG. 2.

A specific structure of the network device in FIG. 9 in this application may be shown in FIG. 10.

FIG. 10 is a schematic diagram of a structure of a network device 1000 according to an embodiment of this application. The network device 1000 includes a main control board 1010 and an interface board 1030.

The main control board 1010 is also referred to as a main processing unit (main processing unit, MPU) or a route processor (route processor). The main control board 1010 is configured to control and manage components in the network device 1000, and includes route computation, device management, device maintenance, and protocol processing functions. The main control board 1010 includes a central processing unit 1011 and a memory 1012.

The interface board 1030 is also referred to as a line processing unit (line processing unit, LPU), a line card (line card), or a service board. The interface board 1030 is configured to provide various service interfaces and forward a data packet. The service interfaces include but are not limited to an Ethernet interface, a POS (Packet over SONET/SDH) interface, and the like. The interface board 1030 includes a central processing unit 1031, a network processor 1032, a forwarding entry memory 1034, and a physical interface card (physical interface card, PIC) 1033.

The central processing unit 1031 on the interface board 1030 is configured to control and manage the interface board 1030 and communicate with the central processing unit 1011 on the main control board 1010.

The network processor 1032 is configured to forward a packet. The network processor 1032 may be in form of a forwarding chip.

The physical interface card 1033 is configured to implement a physical layer connection function. Original traffic enters the interface board 1030 from the physical interface card 1033, and a processed packet is sent out from the physical interface card 1033. The physical interface card 1033 includes at least one physical interface. The physical interface is also referred to as a physical port, and the physical interface may be a flexible Ethernet (Flexible Ethernet, FlexE) physical interface. The physical interface card 1033, also referred to as a subcard, may be mounted on the interface board 1030, and is responsible for converting a photoelectric signal into a packet, performing validity check on the packet, and then forwarding the packet to the network processor 1032 for processing. In some embodiments, the central processing unit 1031 on the interface board 1030 may also perform a function of the network processor 1032, for example, forward software based on a general-purpose CPU, so that the interface board 1030 does not need the network processor 1032.

Optionally, the network device 1000 includes a plurality of interface boards. For example, the network device 1000 further includes an interface board 1040, and the interface board 1040 includes a central processing unit 1041, a network processor 1042, a forwarding entry memory 1044, and a physical interface card 1043.

Optionally, the network device 1000 further includes a switch fabric 1020. The switch fabric 1020 may also be referred to as a switch fabric unit (switch fabric unit, SFU). When the network device has a plurality of interface boards 1030, the switch fabric 1020 is configured to complete data exchange between the interface boards. For example, the interface board 1030 and the interface board 1040 may communicate with each other by using the switch fabric 1020.

The main control board 1010 is coupled to the interface board. For example, the main control board 1010, the interface board 1030 and the interface board 1040, and the switch fabric 1020 are connected by using a system bus and/or a system backplane to implement communication. In a possible implementation, an inter-process communication (inter-process communication, IPC) channel is established between the main control board 1010 and the interface board 1030, and the main control board 1010 communicates with the interface board 1030 through the IPC channel.

Logically, the network device 1000 includes a control plane and a forwarding plane. The control plane includes the main control board 1010 and the central processing unit 1031. The forwarding plane includes components that perform forwarding, such as the forwarding entry memory 1034, the physical interface card 1033, and the network processor 1032. The control plane performs functions such as distributing a route, generating a forwarding table, processing signaling and a protocol packet, and configuring and maintaining a status of a device. The control plane delivers the generated forwarding table to the forwarding plane. On the forwarding plane, the network processor 1032 searches the forwarding table delivered by the control plane to forward a packet received by the physical interface card 1033. The forwarding table delivered by the control plane may be stored in the forwarding entry memory 1034. In some embodiments, the control plane and the forwarding plane may be completely separated, and are not on a same device.

It should be understood that the obtaining unit 801 and the sending unit 803 in the network device 800 may be equivalent to the physical interface card 1033 or the physical interface card 1043 in the network device 1000. The processing unit 802 in the network device 800 may be equivalent to the central processing unit 1011 or the central processing unit 1031 in the network device 1000, or may be equivalent to program code or instructions stored in the memory 1012.

It should be understood that an operation on the interface board 1040 is consistent with an operation on the interface board 1030 in this embodiment of this application. For brevity, details are not described again. It should be understood that the network device 1000 in this embodiment may correspond to the first network device in the foregoing method embodiments. The main control board 1010, the interface board 1030, and/or the interface board 1040 in the network device 1000 may implement functions that the first network device has and/or various steps implemented by the first network device in the foregoing method embodiments. For brevity, details are not described herein again.

It should be noted that, there may be one or more main control boards. When there are a plurality of main control boards, the main control boards may include an active main control board and a standby main control board. There may be one or more interface boards. A network device having a stronger data processing capability provides more interface boards. There may also be one or more physical interface cards on the interface board. There may be no switch fabric or one or more switch fabrics. When there are a plurality of switch fabrics, load sharing and redundancy backup may be implemented together. In a centralized forwarding architecture, the network device may not need the switch fabric, and the interface board provides a function of processing service data in an entire system. In a distributed forwarding architecture, the network device may have at least one switch fabric, and data exchange between a plurality of interface boards is implemented by using the switch fabric, to provide a large-capacity data exchange and processing capability. Optionally, the network device may also be in a form in which there is only a board, that is, there is no switch fabric, and functions of the interface board and the main control board are integrated on the board. In this case, a central processing unit on the interface board and a central processing unit on the main control board may be combined into one central processing unit on the board, to perform a function obtained after the central processing unit on the interface board and the central processing unit on the main control board are superimposed. Which architecture is specifically used depends on a specific networking deployment scenario, and is not uniquely limited herein.

In some possible embodiments, the foregoing first network device may be implemented as a virtual device. The virtual device may be a virtual machine (virtual machine, VM), a virtual router, or a virtual switch that runs a program for implementing a packet sending function. The virtual device is deployed on a hardware device (for example, a physical server). For example, the first network device may be implemented based on a general-purpose physical server in combination with a network functions virtualization (network functions virtualization, NFV) technology.

It should be understood that network devices in the various foregoing product forms separately have any function of the first network device in the foregoing method embodiments, and details are not described herein again.

Further, an embodiment of this application further provides a computer program product. When the computer program product runs on a network device, the network device is enabled to perform the method performed by the first network device in the method embodiment corresponding to FIG. 2.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: only A exists, both A and B exist, and only B exists. In addition, the character "/" in this specification generally indicates an "or" relationship between the associated objects.

It should be understood that in embodiments of this application, "B corresponding to A" indicates that B is associated with A, and B may be determined based on A. However, it should be further understood that determining B based on A does not mean that B is determined based only on A, and B may alternatively be determined based on A and/or other information.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the apparatus embodiment described above is merely an example. For example, division into units is merely logical function division and during actual implementation, there may be another division manner. For example, a plurality of units or components may be combined or integrated into another system, or some features may be ignored or not performed. In addition, the displayed or discussed mutual coupling or direct coupling or communication connection may be implemented through some interfaces. The indirect coupling or communication connection between the apparatuses or units may be implemented in an electrical form, a mechanical form, or another form.

The units described as separate components may or may not be physically separate, and components displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated units may be implemented in a form of hardware, or may be implemented in a form of a software functional unit.

## Claims

1. A packet transmission method, comprising:
obtaining, by a first network device, a remote direct memory access RDMA packet, wherein the RDMA packet comprises a transmission identifier, and RDMA packets having a same transmission identifier need to be transmitted in sequence;
determining, by the first network device, a target forwarding path based on the transmission identifier and a destination address of the RDMA packet; and
forwarding, by the first network device, the RDMA packet through the target forwarding path.

2. The method according to claim 1, wherein the determining, by the first network device, a target forwarding path based on the transmission identifier and a destination address of the RDMA packet comprises:
determining, by the first network device based on the destination address of the RDMA packet, a plurality of forwarding paths that are capable of being used for forwarding the RDMA packet; and
determining, by the first network device, the target forwarding path from the plurality of forwarding paths based on the transmission identifier.

3. The method according to claim 2, wherein the determining, by the first network device, the target forwarding path from the plurality of forwarding paths based on the transmission identifier comprises:
determining, by the first network device, the target forwarding path from the plurality of forwarding paths based on the transmission identifier and one or more of a source address, the destination address, a source port number, a destination port number, and a protocol number of the RDMA packet.

4. The method according to any one of claims 1 to 3, wherein the obtaining, by a first network device, an RDMA packet comprises:
sequentially obtaining, by the first network device, a plurality of RDMA packets, wherein all the plurality of RDMA packets comprise the transmission identifier, and destination addresses of the plurality of RDMA packets are the same; and
the forwarding, by the first network device, the RDMA packet through the target forwarding path comprises:
sequentially forwarding, by the first network device, the plurality of RDMA packets through the target forwarding path.

5. The method according to any one of claims 1 to 4, wherein the transmission identifier is located in an RDMA header of the RDMA packet.

6. The method according to claim 5, wherein the transmission identifier is located in one or more reserved fields in the RDMA header.

7. The method according to claim 5, wherein the transmission identifier is located in an extended field in the RDMA header.

8. The method according to any one of claims 1 to 7, wherein the RDMA packet comprises an RDMA over converged Ethernet RoCE packet, an iWARP packet, or an InfiniBand InfiniBand packet.

9. The method according to any one of claims 1 to 8, wherein the obtaining, by a first network device, a remote direct memory access RDMA packet comprises:
obtaining, by the first network device, a message sent by an application layer; and
generating, by the first network device, at least one RDMA packet based on the message, wherein the at least one RDMA packet comprises a same transmission identifier.

10. The method according to any one of claims 1 to 8, wherein the obtaining, by a first network device, a remote direct memory access RDMA packet comprises:
receiving, by the first network device, the RDMA packet sent by a second network device, wherein the second network device is an upstream device of the first network device.

11. A network device, comprising: an obtaining unit, a processing unit, and a sending unit, wherein
the obtaining unit is configured to obtain a remote direct memory access RDMA packet, wherein the RDMA packet comprises a transmission identifier, and RDMA packets having a same transmission identifier need to be transmitted in sequence;
the processing unit is configured to determine a target forwarding path based on the transmission identifier and a destination address of the RDMA packet; and
the sending unit is configured to forward the RDMA packet through the target forwarding path.

12. The network device according to claim 11, wherein the processing unit is further configured to:
determine, based on the destination address of the RDMA packet, a plurality of forwarding paths that are capable of being used for forwarding the RDMA packet; and
determine the target forwarding path from the plurality of forwarding paths based on the transmission identifier.

13. The network device according to claim 12, wherein the processing unit is specifically configured to determine the target forwarding path from the plurality of forwarding paths based on the transmission identifier and one or more of a source address, the destination address, a source port number, a destination port number, and a protocol number of the RDMA packet.

14. The network device according to any one of claims 11 to 13, wherein the obtaining unit is further configured to sequentially obtain a plurality of RDMA packets, wherein all the plurality of RDMA packets comprise the transmission identifier, and destination addresses of the plurality of RDMA packets are the same; and
the processing unit is further configured to sequentially forward the plurality of RDMA packets through the target forwarding path.

15. The network device according to any one of claims 11 to 14, wherein the transmission identifier is located in an RDMA header of the RDMA packet.

16. The network device according to claim 15, wherein the transmission identifier is located in one or more reserved fields in the RDMA header.

17. The network device according to claim 15, wherein the transmission identifier is located in an extended field in the RDMA header.

18. The network device according to any one of claims 11 to 17, wherein the RDMA packet comprises an RDMA over converged Ethernet RoCE packet, an iWARP packet, or an InfiniBand InfiniBand packet.

19. The network device according to any one of claims 11 to 18, wherein the obtaining unit is configured to obtain a message sent by an application layer; and
the processing unit is configured to generate at least one RDMA packet based on the message, wherein the at least one RDMA packet comprises a same transmission identifier.

20. The network device according to any one of claims 11 to 18, wherein the obtaining unit is configured to receive the RDMA packet sent by a second network device, wherein the second network device is an upstream device of the first network device.

21. A network system, comprising a plurality of network devices according to any one of claims 11 to 20.
